# EUROPEAN PATENT APPLICATION

(11) **EP 1 786 007 A1**
(43) Date of publication of application: **16.05.2007**
(21) Application number: 05781044.2
(22) Date of filing: 29.08.2005
(51) Int. Cl.: H01G 9/038, H01G 9/12, H01G 9/155

(54) **CLOSED TYPE CAPACITOR**

(30) Priority: 30.08.2004 JP 2004249867
(71) Applicant: Nisshinbo Industries, Inc., Chuo-ku, Tokyo 103-8650 (JP); JAPAN RADIO CO., LTD, Mitaka-shi, Tokyo 181-8510 (JP)
(72) Inventor: YOSHIDA, Hiroshi, Chiba-shi, Chiba 267-0056 (JP); KOTANI, Mitsugu, Chiba-shi, Chiba 267-0056 (JP); MARUKANE, Shoko, Chiba-shi, Chiba 267-0056 (JP); NAKAGAWA, Hideshige, Chiba-shi, Chiba 267-0056 (JP); HAMADA, Toshihiro, Chiba-shi, Chiba 267-0056 (JP); HIGASHI, Yoji, Mitaka-shi, Tokyo 181-8510 (JP)
(74) Representative: Stuart, Ian Alexander
(86) International application number: PCT/JP2005/015634
(87) International publication number: WO 2006/025306

(57) **Abstract**

A closed type capacitor (1) includes: an external container (10) which cuts off gas; a pair of polarized electrodes contained in the external container (10); a separator arranged between the electrodes; and a non-aqueous electrolytic liquid containing electrolyte and a non-aqueous organic solvent if necessary. The external container (10) has an opening (10A) for communication between inside and outside the container and a valve mechanism (13) which is arranged to cover the opening (10A) and which is opened and closed by the pressure difference between the inside and outside the container (10). The electrolyte contains more than 30 mass % of ion liquid. This closed type capacitor can minimize separation of electrolyte in the valve path.

## Description

### TECHNICAL FIELD

The present invention relates to a hermetically sealed electrical storage device. More specifically, it relates to a hermetically sealed electrical storage device having an outer enclosure with a valve mechanism therein.

### BACKGROUND ART

It is known that when an electric double layer capacitor which uses a nonaqueous electrolytic solution is charged and discharged, the electrolytic solution and the electrode members undergo decomposition due to the influence of inadvertent impurities such as moisture within the system, resulting in the generation of gases from the capacitor cells.
Accordingly, a hermetically sealed enclosure made of a housing material having gas barrier properties that prevent moisture ingress into the capacitor cells is generally used as the outer enclosure for electrical double layer capacitors. Known examples of such hermetically sealed enclosures are described in Patent Document 1: JP-A 11-74148, which discloses an electric double layer capacitor in which a metal case is used as the outer enclosure; and in Patent Document 2: JP-A 9-186055, which discloses an electric double layer capacitor in which a laminated film composed of a synthetic resin and a metal thin-film is used as the outer enclosure.

However, even when an outer enclosure having gas barrier properties is used, it is difficult to completely prevent decomposition of the electrolytic solution within the capacitor. Hence, a not inconsiderable amount of gas evolves due to decomposition of the electrolytic solution associated with charging and discharging.
Electric double layer capacitors can be charged and discharged so long as the electrolytic solution does not become depleted. However, the accumulation of evolved gases between the electrodes lowers the capacitance, and excessive gas evolution can lead to deformation or failure of the enclosure.
Therefore, the continuous discharge of evolved gases outside of the enclosure is essential for enhancing the durability of the capacitor.

In light of this, attempts have been made to provide the outer enclosure with a pressure release valve which intermittently opens and closes according to the pressure within the outer enclosure. Known examples of such pressure release values include a ball valve made of an elastomer (Patent Document 3: JP-U 6-52135), a check valve composed of a spring and a ball (Patent Document 4: JP-A 8-115859), a pressure regulating valve having a cap made of an elastomeric material with moisture barrier properties (Patent Document 5: JP-A 2001-230161), a pressure release valve composed of a cap-like member, a raised member and an elastomeric plate disposed between these members (Patent Document 6: JP-A 2002-280272), and a pressure release valve having a self-sealing channel made of an elastomeric material (Patent Document 7: JP-A 2003-100571).

By providing one of these pressure release valves in the outer enclosure of a capacitor, it is possible to achieve a better capacitor durability than when such a pressure release valve is not provided.
However, when gas is released from a pressure release valve due to a rise in pressure within the capacitor, electrolytic solution often passes through the valve. This results in the retention of electrolytic solution within the channel that communicates between the interior and exterior of the enclosure. On subsequent evaporation of the solution, electrolyte crystals are deposited, which may lead to other problems, such as obstruction of the channel or valve malfunction.

A technique that has been developed to resolve this problem involves providing on the inside of the pressure release valve a porous filter capable of vapor-liquid separation so as to prevent the retention of electrolytic solution within the valve (Patent Document 8: JP-A 2000-195761). However, because the filter lacks a sufficient ability for vapor-liquid separation, the deposition of electrolyte salt cannot be completely prevented.

Patent Document 1: JP-A 11-74148
Patent Document 2: JP-A 9-186055
Patent Document 3: JP-U 6-52135
Patent Document 4: JP-A 8-115859
Patent Document 5: JP-A 2001-230161
Patent Document 6: JP-A 2002-280272
Patent Document 7: JP-A 2003-100571
Patent Document 8: JP-A 2000-195761

### DISCLOSURE OF THE INVENTION

### Problems to be Solved by the Invention

Therefore, it is an object of the present invention to provide a hermetically sealed electrical storage device having in the outer enclosure a valve mechanism which minimizes electrolyte deposition within the valve channel.

### Means for Solving the Problems

As a result of extensive investigations, the inventors have discovered that, in a hermetically sealed electrical storage device composed of polarizable electrodes, a separator and a nonaqueous electrolytic solution which are housed within an outer enclosure provided with a valve mechanism, by using an electrolyte of which more than 30 wt% is an ionic liquid, it is possible to effectively prevent the deposition of electrolyte salt within the valve mechanism.

Accordingly, in a first aspect, the invention provides a hermetically sealed electrical storage device comprising an outer enclosure having gas barrier properties, at least a pair of polarizable electrodes housed in the outer enclosure, a separator interposed between both electrodes, and a nonaqueous electrolytic solution composed of an electrolyte and an optional nonaqueous organic solvent, wherein the outer enclosure has formed therein an opening for communicating between the interior and exterior of the enclosure and is provided with a valve mechanism which covers the opening and opens and closes in accordance with a difference in pressure between the interior and exterior of the enclosure; and more than 30 wt% of the electrolyte is an ionic liquid.

In a second aspect, the invention provides a hermetically sealed electrical storage device comprising an outer enclosure having gas barrier properties and at least one electrical storage element housed within the outer enclosure, wherein the outer enclosure has formed therein an opening for communicating between the interior and exterior of the enclosure and is provided with a valve mechanism which covers the opening and opens and closes in accordance with a difference in pressure between the interior and exterior of the enclosure; the electrical storage element comprises an inner enclosure, at least a pair of polarizable electrodes housed within the inner enclosure, a separator interposed between both electrodes, and a nonaqueous electrolytic solution composed of an electrolyte, of which more than 30 wt% is an ionic liquid, and an optional nonaqueous organic solvent; and at least one electrical storage element is not hermetically sealed.

In the second hermetically sealed electrical storage device, when a plurality of electrical storage elements are housed at the interior of the outer enclosure having a valve mechanism, they may be connected together in series or in parallel. In such a case, it is preferable that not all the electrical storage elements be hermetically sealed.
As used herein, "not hermetically sealed" means that, generally, when a nonaqueous electrical storage element is used alone, it is not hermetically sealed with the required degree of gas barrier properties. In other words, this signifies a state where the electrolytic solution is held within the electrical storage element, but evolved gases do not remain within the electrical storage element. Specific arrangements encompassed by this expression include not only those in which an opening or the like in the electrical storage element is open, but also cases in which the element is simply sealed to a degree where the electrolytic solution does not leak.

In the hermetically sealed electrical storage devices according to the above first and second aspects of the invention, by using as the electrolyte present in the nonaqueous electrolytic solution of the hermetically sealed electrical storage device provided with a valve mechanism an electrolyte which is more than 30 wt% composed of an ionic liquid liquid, crystallization of the electrolyte within the valve mechanism is discouraged, enabling the valve mechanism to function stably over an extended period of time. As a result, gas generated at the interior of the outer enclosure can be continuously released, thus making it possible to prevent a decline in capacitance, as well as deformation and rupture of the outer enclosure, due to gas buildup.
The inclusion of more than 30 wt% of ionic liquid, which is a relatively large amount, makes it possible to use less organic solvent in the electrolytic solution, thus enabling the ionic concentration of the electrolytic solution to be increased within a range where crystallization of the electrolyte does not arise.

Also, in the respective hermetically sealed electrical storage devices of the invention, the electrolyte may be composed solely of ionic liquid, although it is advantageous for an electrolyte salt which is solid at room temperature (about 25°C) to be included in an amount of more than 0 but less than 70 wt%, preferably more than 0 and up to 50 wt% (with the ionic liquid content in the electrolyte being at least 50 wt%), and more preferably more than 0 and up to 30 wt% (with the ionic liquid content in the electrolyte being at least 70 wt%). The ordinary crystalline electrolytes used in electrical storage devices are capable of being isolated and refined as crystals, and are thus of high purity. By using such a crystalline electrolyte, the purity of the overall electrolyte is increased, enabling the charge/discharge characteristics of the electrical storage elements to be improved. Also, because crystalline electrolytes are inexpensive, a reduction in costs can be achieved.

In addition, it is advantageous for the opening formed in the outer enclosure to have a surface area of from 0.01 mm² to 2 cm², preferably from 0.1 mm² to 1 cm², and more preferably from 1 mm² to 0.5 cm². At less than 0.01 mm², the valve mechanism may not function properly. On the other hand, at more than 2 cm², the amount of moisture which passes out of the enclosure becomes large, which may lead to a deterioration in the electrical storage device.

As described subsequently in detail, any of various known valve mechanisms may be employed. However, to simplify the construction of the valve mechanism and reduce production costs, it is preferable to use a valve which is an elastomeric resin sheet having a hole formed therein. In this valve mechanism, the hole formed in the elastomeric resin sheet is closed by the resilience of the plastic so as to cut off communication between the interior and exterior of the outer enclosure in the absence of a difference in pressure therebetween. The elastomeric resin sheet preferably has a thickness of at least 0.1 mm but less than 0.8 mm, and a hardness of from 30 to 90.
The operating pressure of the valve mechanism will vary depending on the material making up the outer enclosure, and thus cannot be strictly specified. However, to prevent malfunction of the valve mechanism due to environmental changes such as changes in temperature, it is advantageous for the pressure difference between the interior and exterior of the enclosure to be at least about 5 kPa.

The inventive method for preventing the deposition of electrolyte salt in a valve mechanism of a hermetically sealed electrical storage device involves adding an ionic liquid to the nonaqueous electrolytic solution in a hermetically sealed electrical storage device comprising an outer enclosure with gas barrier properties in which a valve mechanism has been provided, at least a pair of polarizable electrodes housed in the outer enclosure, a separator interposed between both electrodes, and a nonaqueous electrolytic solution containing an electrolyte salt which is solid at room temperature.
By thus adding an ionic liquid to a nonaqueous electrolytic solution containing an electrolyte salt which is solid at room temperature, the electrolyte salt can be discouraged from depositing in the valve mechanism and deterioration of the hermetically sealed electrical storage device due to malfunction of the valve mechanism can be suppressed.

By adding the ionic liquid in an amount of at least 43 parts by weight, preferably at least 66 parts by weight, more preferably at least 100 parts by weight, and even more preferably at least 233 parts by weight, per 100 parts by weight of the electrolyte salt which is solid at room temperature, the deposition of electrolyte salt in the valve mechanism can be reliably prevented, making it possible to ensure stable operation by the valve mechanism over an extended period of time.

### EFFECTS OF THE INVENTION

In the hermetically sealed electrical storage device according to the first and second aspects of the invention, by including within the electrolyte more than 30 wt% of an ionic liquid, crystallization of the electrolyte within the valve mechanism is discouraged, enabling the valve mechanism to function stably over an extended period of time. As a result, gases generated within the outer enclosure can be continuously released, making it possible to prevent a drop in capacitance and deformation or failure of the outer enclosure due to gas buildup. Moreover, by setting the size of the opening in the outer enclosure within a specific range, air ingress from outside the enclosure can be prevented, thus making it possible to prevent deterioration of the electrical storage device due to the entry of moisture.

### BRIEF DESCRIPTION OF THE DIAGRAMS

FIG. 1 is partially cutaway, perspective view of a hermetically sealed electrical storage device according to a first embodiment of the invention.
FIG. 2 is an enlarged cross-sectional view of the valve mechanism in the same embodiment.
FIG. 3 is a schematic sectional view of a hermetically sealed electrical storage device according to a second embodiment of the invention.
FIG. 4 is a sectional view which corresponds to FIG. 2 and illustrates a first variation of the valve mechanism.
FIG. 5 is a sectional view which corresponds to FIG. 2 and illustrates a second variation of the valve mechanism.
FIG. 6 is a sectional view which corresponds to FIG. 2 and illustrates a third variation of the valve mechanism.
FIG. 7 is a sectional view which corresponds to FIG. 2 and illustrates a fourth variation of the valve mechanism.

### LEGEND

1, 2: Hermetically sealed electrical storage device
10, 20, 40, 60: Outer enclosure
10A, 20A, 40A, 60A: Opening
13, 50, 70: Valve mechanism
13A: Elastomeric resin sheet
13B: Hole
30: Electrical storage element

### BEST MODE FOR CARRYING OUT THE INVENTION

The invention is described more fully below.
In the first and second hermetically sealed electrical storage devices of the invention, "nonaqueous electrolytic solution containing an electrolyte" refers to one of the following: (1) a nonaqueous electrolytic solution composed solely of an ionic liquid, (2) a nonaqueous electrolytic solution composed of an ionic liquid and an electrolyte salt which is solid at room temperature, or (3) a nonaqueous electrolytic solution composed of an ionic liquid, an electrolyte salt which is solid at room temperature, and a nonaqueous organic solvent.
Here, the ionic liquid used as the electrolyte may be any known ionic liquid without particular limitation, provided it is a room-temperature fused salt having a melting point of 25°C or below.

Illustrative examples of ionic liquids that may be used include those which contain as the cation component an imidazolium ion such as 1-ethyl-3-methylimidazolium ion, 1-butyl-3-methylimidazolium ion, 1,2,3-trimethylimidazolium ion, 1,2-dimethyl-3-ethylimidazolium ion, 1,2-dimethyl-3-propylimidazolium ion or 1-butyl-2,3-dimethylimidazolium ion; a pyridinium ion such as N-propylpyridinium ion, N-butylpyridinium ion, 1-butyl-4-methylpyridinium ion or 1-butyl-2,4-dimethylpyridinium ion; or a quaternary ammonium ion or quaternary phosphonium ion of formula (1) below. Of these, ionic liquids containing quaternary ammonium ions or quaternary phosphonium ions are preferred from the standpoint of withstand voltage, solvent solubility, and ionic conductivity.

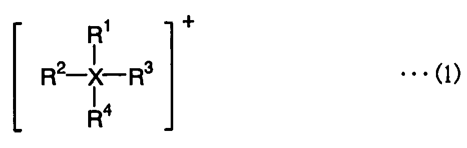

In the formula, R¹ to R⁴ are each independently an alkyl group of 1 to 5 carbons or an alkoxyalkyl group of the formula R'-O-(CH₂)ₙ- (R' being methyl or ethyl, and the letter n being an integer from 1 to 4) and any two of R¹, R², R³ and R⁴ may form a ring, with the proviso that at least one of R¹ to R⁴ is the alkoxyalkyl group of the above formula. X is a nitrogen atom or a phosphorus atom.

Examples of the alkyl group of 1 to 5 carbons include methyl, ethyl, propyl, 2-propyl, butyl and pentyl. Examples of alkoxyalkyl groups of the formula R'-O-(CH₂)ₙ- include methoxymethyl, ethoxymethyl, methoxyethyl, ethoxyethyl, methoxypropyl, ethoxypropyl, methoxybutyl and ethoxybutyl.
Exemplary compounds in which any two groups from among R¹, R², R³ and R⁴ form a ring include, when X is a nitrogen atom, quaternary ammonium salts having an aziridine, azetidine, pyrrolidine or piperidine ring; and when X is a phosphorus atom, quaternary phosphonium salts having a pentamethylenephosphine (phospholinane) ring.

Examples of anions that may be used as the constituent anions in the ionic liquid include, but are not limited to, BF₄⁻, CF₃BF₃⁻, C₂F₅BF₃⁻, PF₆⁻, AsF₆⁻, SbF₆⁻, AlCl₄⁻, HSO₄⁻, ClO₄⁻, CH₃SO₃⁻, CF₃SO₃⁻, CF₃CO₂⁻, (CF₃SO₂)₂N⁻, Cl⁻, Br⁻ and I⁻.

The electrolyte salt that is solid at room temperature which is used together with the ionic liquid can be suitably selected from among crystalline electrolyte salts employed in ordinary electrical storage devices. Illustrative examples include (C₂H₅)₄PBF₄, (C₃H₇)₄PBF₄, (C₄H₉)₄PBF₄, (C₆H₁₃)₄PBF₄, (C₄H₉)₃CH₃PBF₄, (C₂H₅)₃(Ph-CH₂)PBF₄ (where "Ph" stands for a phenyl group), (C₂H₅)₄PPF₆, (C₂H₅)PCF₃SO₂, (C₂H₅)₄NBF₄, (C₄H₉)₄NBF₄, (C₆H₁₃)₄NBF₄, (C₂H₅)₆NPF₆, LiBF₄ and LiCF₃SO₃. These may be used singly or as combinations of two or more thereof.

The nonaqueous organic solvent may be suitably selected from among organic solvents employed in ordinary nonaqueous electrical storage devices.
Illustrative examples include acyclic ethers such as dibutyl ether, 1,2-dimethoxyethane, 1,2-ethoxymethoxyethane, methyl diglyme, methyl triglyme, methyl tetraglyme, ethyl glyme, ethyl diglyme, butyl diglyme and glycol ethers (e.g., ethyl cellosolve, ethyl carbitol, butyl cellosolve, butyl carbitol); heterocyclic ethers such as tetrahydrofuran, 2-methyltetrahydrofuran, 1,3-dioxolane and 4,4-dimethyl-1,3-dioxane; butyrolactones such as γ-butyrolactone, γ-valerolactone, δ-valerolactone, 3-methyl-1,3-oxazolidin-2-one and 3-ethyl-1,3-oxazolidin-2-one; and the following solvents commonly used in electrochemical devices: amide solvents (e.g., N-methylformamide, N,N-dimethylformamide, N-methylacetamide, N-methylpyrrolidinone), carbonate solvents (e.g., diethyl carbonate, dimethyl carbonate, ethyl methyl carbonate, propylene carbonate, ethylene carbonate, styrene carbonate) and imidazolidinone solvents (e.g., 1,3-dimethyl-2-imidazolidinone). These may be used singly or as mixtures of two or more thereof.
When an organic solvent is used in the nonaqueous electrolytic solution, the amount of use is preferably from 40 to 90 wt%, and more preferably from 60 to 80 wt%, of the nonaqueous electrolytic solution.

The polarizable electrodes are each composed of a current collector for a positive electrode or a current collector for a negative electrode, together with an electrode composition applied to the surfaces of the respective substrates. At least one pair of positive and negative electrodes is used. These electrodes are generally fabricated by applying an electrode composition (slurry) obtained by mixing an electrode active material, an electrically conductive material, a binder and the like in a solvent such as N-methylpyrrolidone to at least one side of the current collector for the positive electrode or the negative electrode, then drying and rolling, etc.
The current collectors for the positive and negative electrodes, and the electrode active materials, electrically conductive materials and binders which make up the electrode compositions, are not subject to any particular limitation. Each may be suitably selected from among known materials used in electrical storage devices.

Illustrative examples of suitable electrode active materials include various starting materials, such as coconut shells, coffee beans, bamboo, sawdust, coal-based pitch, petroleum-based pitch, coke, mesophase carbon, phenolic resins or vinyl chloride resins, that have been fired and activated to form an activated carbon.
Illustrative examples of the conductive material include carbon black, Ketjenblack, acetylene black, carbon whiskers, carbon fibers, natural graphite, artificial graphite, titanium oxide and ruthenium oxide; and fibers of metals such as aluminum or nickel. The conductive material may be added in an amount of, for example, from 0.1 to 20 parts by weight per 100 parts by weight of the activated carbon.

Illustrative examples of substances that may be used as the binder include polytetrafluoroethylene, polyvinylidene fluoride (PVDF), carboxymethyl cellulose, fluoroolefin copolymer crosslinked polymers, polyvinyl alcohols, polyacrylic acids, polyimides, petroleum-based pitch, coal-based pitch, and phenolic resins. The binder may be added in an amount of from 0.5 to 20 parts by weight per 100 parts by weight of the activated carbon.
Illustrative examples of current collectors for positive electrodes include aluminum foil and aluminum oxide foil. Illustrative examples of current collectors for negative electrodes include copper foil, nickel foil, and metal foils on the surface of which has been formed a copper plating film or a nickel plating film.

The separator may be suitably selected from among known separators commonly used in electrical storage devices. Illustrative examples include polyolefin nonwoven fabric, PTFE porous film, kraft paper, sheet laid from a blend of rayon fibers and sisal hemp fibers, manila hemp sheet, glass fiber sheet, cellulose-based electrolytic paper, paper made from rayon fibers, and paper made from a blend of cellulose and glass fibers. These separators may be used as single sheets or as a plurality of layers of the same type or a combination of different types, and interleaved in this form between the polarizable electrodes.

The outer enclosure having gas barrier properties may be any enclosure having gas barrier properties which is made of a material such as sheet metal or metal foil that is used in ordinary hermetically sealed electrical storage devices. The outer enclosure may be in the shape of a rigid box which is closed on one end or a flexible bag. Specific examples include metal cases made of sheet metal, metal laminate packs (bags) composed of a resin film laminated onto one or both sides of a gas barrier layer made of metal foil, and plastic cases obtained by shaping a plastic laminate having a gas barrier layer made of metal foil.
Illustrative examples of materials that may be used in the gas barrier layer include metal materials such as aluminum, nickel or iron, and composite materials made of any of these metals, carbon, silicon oxide, alumina or the like vapor-deposited onto a base of resin film or the like.

Illustrative examples of resins that may be used in the above resin films include polyolefin resins such as polyethylene resin and polypropylene resin; polyester resins such as polyethylene terephthalate, polybutylene terephthalate, polyethylene naphthalate, polybutylene naphthalate and copolyester; and polycarbonate resins. Of these, the use of polypropylene and polyethylene are preferred from the standpoint of their insulating properties and their chemical resistance to electrolytes.

The plastic case generally includes, in addition to a gas barrier layer, a resin layer for protecting the gas barrier layer and/or a molding material layer (reinforcing layer) for ensuring the structural strength of the enclosure. A layer made of a resin mentioned above in connection with the resin film above may be used here as the resin layer. Examples of other materials that make up the molding material layer include polyolefin resins such as polyethylene and polypropylene; general-purpose synthetic resins such as polystyrene resins, ABS resins, AS resins, PVC resins, methacrylic resins and fluorocarbon resins; polyamide resins such as nylon; engineering plastics such as saturated polyester resins, polycarbonate resins, polyacrylate resins, polyacetal resins, polysulfone resins and modified polyphenylene ether resins; and melt-moldable metals such as aluminum alloys and magnesium alloys. Of these, from the standpoint of resistance to dissolution by the nonaqueous electrolytic solution, moisture resistance, moldability and impact resistance, it is especially preferable to use a polyolefin resin. To further enhance the mechanical strength or airtightness, it is especially preferable for an inorganic filler such as carbon black or talc to be mixed into the molding material layer. Also, ribs in the form of bands or a lattice may be formed on the inside surface of the case to increase the strength of the case. These ribs may be separately attached, although it is easy to integrally form the ribs by imparting a thickness in the form of bands or a lattice to portions of at least one layer (preferably the molding material layer) making up the plastic case.

By providing the layer made of a polyolefin resin such as polyethylene or polypropylene, a polyamide resin such as nylon, a saturated polyester resin or a polycarbonate resin with a degree of thickness that is capable of maintaining the structural strength of the case, it can be conferred with the functions of both the resin layer (protective layer) and the molding material layer (reinforcing layer).
The layer made of a metal such as an aluminum alloy or a magnesium alloy combines the functions of both a gas barrier layer and a molding material layer (reinforcing layer).

Each layer making up the plastic case may be bonded by any suitable bonding means. For example, bonding can be effected by one or more type of intervening resin bonding layer composed of, for example, (1) an α-olefin polymer, (2) a copolymer of ethylene with an α-olefin, (3) a copolymer of propylene with an α-olefin, (4) a copolymer of an unsaturated carboxylic acid graft-modified α-olefin polymer with an α-olefin, (5) a copolymer of ethylene with acrylic acid or an acrylic acid derivative, (6) a copolymer of ethylene with methacrylic acid or a methacrylic acid derivative, or (7) a metal ion-crosslinked α-olefin polymer or copolymer with ethylene and an α-olefin.

The inner enclosure of the electrical storage cell or cells in the hermetically sealed electrical storage device according to the second aspect of the invention may be, for example, a bag-like or box-like casing made of a resin film, or either of the following described above in connection with the outer enclosure: a metal-laminated pack (bag) composed of a resin film laminated onto one or both sides of a gas barrier layer made of metal foil, or a plastic case obtained by shaping a resin laminate having a gas barrier layer made of metal foil. Of these, for the sake of simplicity, the use of a casing made of a resin film is preferred.
Resins that may be used in the resin film include those mentioned above. However, based on such considerations as the insulating properties, chemical resistance and workability such as in thermal welding, the use of polypropylene or polyethylene is preferred here as well.

A known shaping process may be used to form the above-described outer enclosure and inner enclosure. Processes that may be used to form a metal case include welding, press forming and injection molding. Processes that may be used to form a plastic case, a metal-laminated pack (bag) or a casing made of resin film include such melt-forming processes as injection molding, vacuum forming and pressure forming.

Any type of known valve mechanism may be used. For example, known valve mechanisms such as those mentioned in above Patent Documents 3 to 8 may be suitably selected and used.
Valve attributes such as shape and size may be suitably adjusted to a size that is capable of maintaining the hermetic sealing properties of the electrical storage device under a normal state of use for the particular type of opening in the above-described outer enclosure. The valve mechanism may be attached at a position either inside or outside of the outer enclosure. Attachment of the valve mechanism to the outer enclosure may be carried out using a suitable means for the particular type of outer enclosure.
If the outer enclosure is a metal-laminated pack (bag) or a plastic case, attachment may be carried out with an adhesive or by thermal welding. If the outer enclosure is a metal case, attachment may be effected with an adhesive or by metal welding.

As already explained, to prevent malfunction due to temperature differences, the working pressure of the valve mechanism should be set so that the valve works at a pressure difference between the inside and outside of the outer enclosure of about 5 kPa. However, the working pressure of the valve mechanism must be adjusted according to the material making up the outer enclosure (i.e., the strength of the outer enclosure).
Specifically, if the outer enclosure is a metal laminated pack (bag) composed of a laminated film having a gas barrier layer made of metal foil, it is advantageous to set the working pressure of the valve mechanism to preferably from 5 to 100 kPa, more preferably 20 to 80 kPa, and even more preferably 45 to 70 kPa.
If the outer enclosure is a metal case made of sheet metal, it is desirable to set the working pressure of the valve mechanism to preferably from 5 to 200 kPa, more preferably from 5 to 100 kPa, even more preferably from 20 to 80 kPa, and most preferably from 45 to 70 kPa.
If the outer enclosure is a plastic case obtained by shaping a resin laminate having a gas barrier layer made of metal foil, it is desirable to set the working pressure of the valve mechanism to preferably 5 to 100 kPa, more preferably 20 to 80 kPa, and even more preferably 45 to 70 kPa.
The working pressure of this valve mechanism can be suitably adjusted by varying the modulus of elasticity of the resilient body (metal spring, elastomeric ball, elastomeric sheet) used in the valve mechanism and by varying the size of the hole formed in the resilient body.

In the hermetically sealed electrical storage device of the invention, the deposition of electrolyte salt in the valve mechanism occurs with great difficulty. Hence, even when the valve mechanism employed is a simple one composed of elastomeric resin in the form of a sheet in which only a hole has been formed, the valve is not prone to obstruction and malfunction will not readily arise over an extended period of time. Accordingly, to reduce the production cost of the electrical storage device, it is preferable to use as the valve mechanism a sheet made of elastomeric resin in which a hole has been formed.
The material making up the elastomeric resin sheet is not subject to any particular limitation, provided it has a low permeability to moisture. Illustrative examples include polyisoprene, butadiene-styrene copolymers, ethylene-propylene-diene copolymers (EPDM), polybutadiene, isobutylene-isoprene copolymers, ethylene-propylene copolymers, polychloroprene, chlorosulfonated polyethylene, butadiene-acrylonitrile copolymers, acrylate copolymers, polyepichlorohydrin, polyurethanes, organic polysulfides, organopolysiloxanes, and propylene hexafluoride-vinyl fluoride copolymers.

The thickness of the elastomeric resin sheet will vary according to the working pressure of the valve mechanism, and thus cannot be strictly specified. However, at a working pressure within approximately the above-indicated range, the thickness will generally be at least 0.1 mm but less than 0.8 mm, preferably from 0.2 to 0.7 mm, and more preferably from 0.3 to 0.6 mm. At a thickness of less than 0.1 mm, the hole that has been formed in the elastomer will tend to rupture, which may make the working pressure unstable. On the other hand, at a thickness of 0.8 mm or more, fine control of the working pressure may be difficult. Another reason why it is preferable for the elastomeric resin sheet to have a thickness of less than 0.8 mm is that the valve mechanism used in the invention also functions as a safety valve for releasing the internal pressure in the event that runaway of the electrical storage device occurs due to malfunction such as overcharging, resulting in a sudden rise in the internal pressure within the sealed enclosure.
The elastomeric resin sheet plate has a hardness, as measured with a type A durometer (Shore A hardness) in accordance with JIS K6253, of preferably from 30 to 90, and more preferably from 50 to 70.
By using an elastomer having a hardness in this range as the valve mechanism, the elastomer will conform to deformations in the outer enclosure, resulting in an excellent adhesion and making it possible to reduce malfunctions by the valve mechanism.

The hole formed in the elastomeric resin sheet is adjusted in accordance with the working pressure of the valve mechanism so that the upper limit in size is the size at which the hole will normally close under the resilience of the elastomeric resin sheet following hole formation. Within the above-indicated range in the working pressure, it is preferable to set the size of the hole in the following range.
That is, when the elastomeric resin sheet is pierced such as with a needle to form a hole therein, the maximum diameter of the needle used is generally from 0.2 to 1.0 mm, preferably from 0.3 to 0.8 mm, and more preferably from 0.4 to 0.6 mm.
When a slit is made with a cutter or the like in the elastomeric resin sheet, the length of the slit is generally from 0.3 to 3 mm, preferably from 0.5 to 2 mm, and more preferably from 0.8 to 1.5 mm.

The hermetically sealed electrical storage devices of the invention can be suitably used as memory backup power supplies for cell phones, notebook computers and wireless terminals, as power supplies for cell phones and portable acoustic devices, as uninterruptible power supplies for personal computers and other equipment, and as various types of low-current electrical storage devices such as load leveling power supplies used in combination with solar power generation or wind power generation. Also, electric double layer capacitors which can be charged and discharged at a high current can be suitably used as high-current electrical storage devices in applications that require a high current, such as electric cars and electrical power tools.

Embodiments of the invention are described below in conjunction with the accompanying diagrams.

### First Embodiment

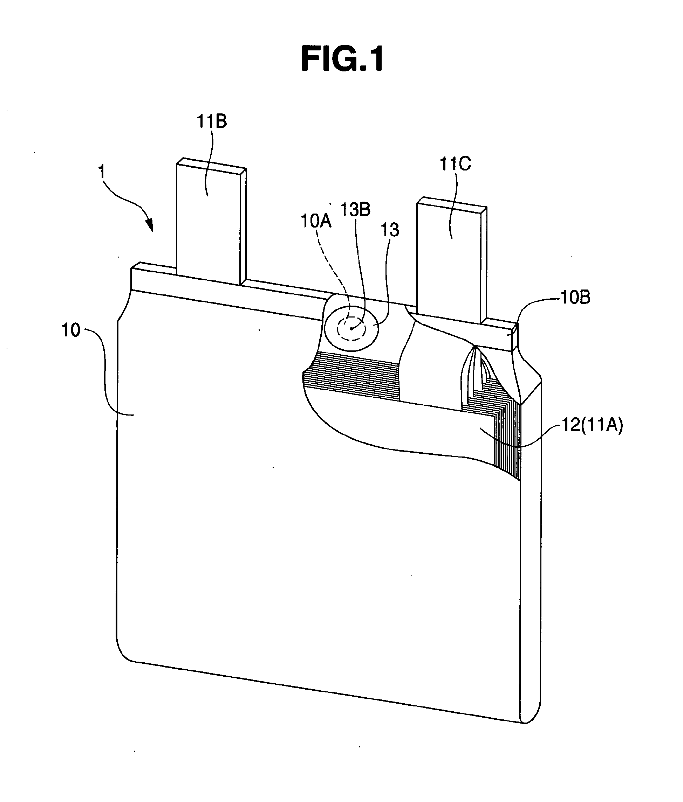

Referring to FIG. 1, a hermetically sealed electrical storage device 1 according to a first embodiment of the invention is composed of an outer enclosure 10 having gas barrier properties, a polarizable electrode assembly 12 housed within the outer enclosure, and a nonaqueous electrolytic solution (not shown) composed of an electrolyte which includes more than 30 wt% of an ionic liquid.
The polarizable electrode assembly 12 is a stack 11A composed of plurality of stacked units, each made of two polarizable electrodes, one of which is a positive electrode and the other of which is a negative electrode, in combination with a separator situated between the two electrodes. To the stack 11A are welded terminals 11B and 11C which extend from the interior to the exterior of the enclosure 10.

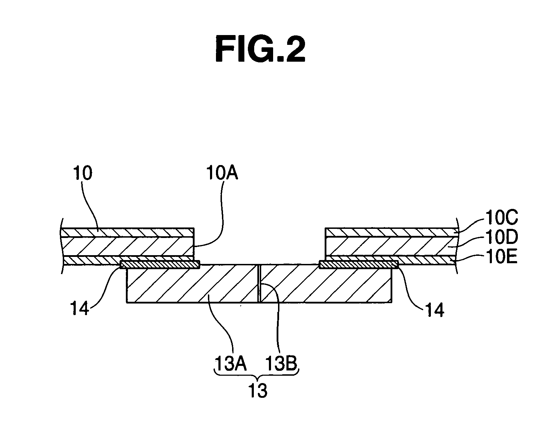

Referring to FIG. 2, the aluminum laminate film making up the outer enclosure 10 is a three-layer laminated film composed of a nylon outer layer 10C, a soft aluminum gas barrier layer 10D and a polypropylene inner layer 10E.
Moreover, a circular opening 10A which communicates between the interior and exterior of the outer enclosure 10 is formed in the outer enclosure 10 at a position located below and near to a seal 10B and between the two terminals 11A and 11B, and a substantially circular valve mechanism 13 is attached so as to cover this opening 10A from inside the outer enclosure 10.
As shown in FIG. 2, the valve mechanism 13 is a substantially circular elastomeric resin sheet 13A in which a hole 13B has been formed with a needle at substantially the center thereof, and is attached to the outer enclosure 10 by thermal welding by a weld zone 14. The hole 13B is normally closed due to the resilience of the elastomeric resin sheet 13A. However, when the internal pressure within the enclosure 10 rises, the hole 13B opens, due likewise to the resilience of the elastomeric resin 13A, thereby releasing gases and the like which have accumulated within the enclosure 10.

### Second Embodiment

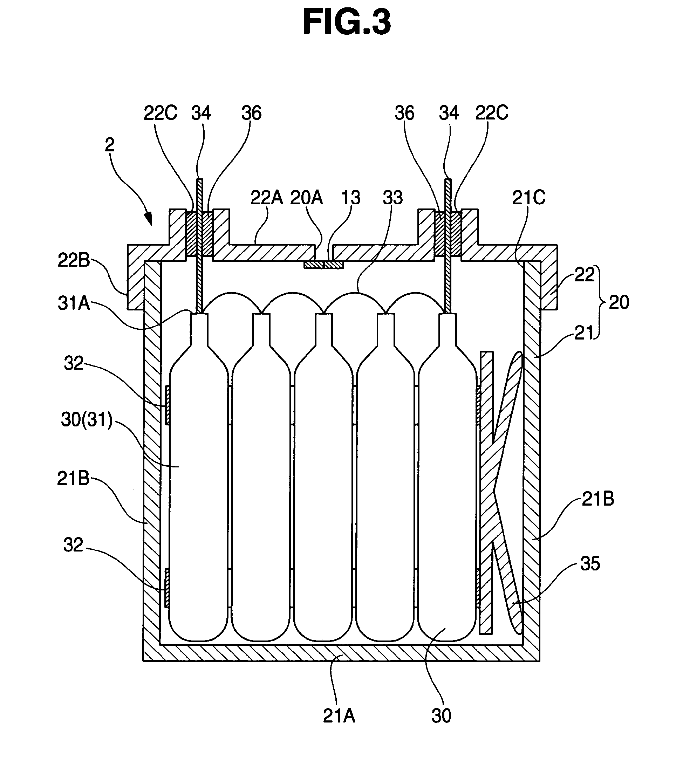

FIG. 3 shows a hermetically sealed electrical storage device 2 according to a second embodiment of the invention. In the description that follows, members identical or similar to those in the first embodiment are assigned the same reference numbers and explanations thereof are omitted.
The hermetically sealed electrical storage device 2 is composed of a plastic case (outer enclosure) 20 having gas barrier properties and a plurality of electrical storage elements 30 housed within the plastic case 20.
The plastic case 20 is composed of a box 21 having a base panel 21A which is substantially rectangular as viewed from above, side walls 21B which rise up from the four peripheral sides of the base panel 21A, and an opening 21C at the top; and a lid 22 that has been placed so as to cover the opening 21C. The box 21 and lid 22 are made by insert molding a laminate (not shown) obtained by laminating, in order from the inside of the plastic case 20 to the outside, a resin layer, an aluminum foil layer, a bonding layer and a molding material layer.

The lid 22 has a flat top 22A which is substantially rectangular as viewed from above and a nesting rim 22B which extends downward from the four peripheral sides of the flat top 22A, so that the lid 22 and the box 21 fit together by means of the nesting rim 22B. The nesting rim 22B and side walls 21B that have been fitted together are bonded by thermal welding. Also, two terminal openings 22C are formed so as to vertically pass through the lid 22 for allowing the passage therethrough of terminals 34.
In addition, a substantially circular opening 20B which communicates between the interior and exterior of the plastic case 20 is formed in the lid 22 between the two terminal openings 22C, and a substantially circular valve mechanism 13 is attached to the lid 22 so as to cover the opening 20B from inside the plastic case 20.

Each of the electrical storage elements 30 is composed of a bag-like casing (inner enclosure) 31 made of polypropylene film which houses therein at least a pair of polarizable electrodes, a separator and a nonaqueous electrolyte (not shown) containing an electrolyte of which more than 30 wt% is an ionic liquid. In this embodiment, the opening 31A in the bag-like casing 31 is not sealed.
The respective electrical storage elements 30 are arranged side-by-side, or in parallel, with the unsealed openings 31A facing upward, and the casings 31 are tied together with two bands 32 in two places--near the openings 31A and near the base of the casings 31. Moreover, the electrical storage elements 30 are electrically connected in series by lead wires 33 and, in this state, pressed together in the parallel direction (leftward in FIG. 2) by a pressing member 35 composed of a leaf spring.

Of the individual electrical storage elements 30 that are electrically connected in series, the electrical storage elements 30 positioned at both ends have terminals 34 connected thereto. These terminals 34 extend from the inside to the outside of the plastic case 20 through the above-described terminal openings 22C. A gasket 36 for maintaining the plastic case 20 in a hermetically sealed state is inserted into the gap between each terminal 34 and the terminal opening 22C through which it passes.

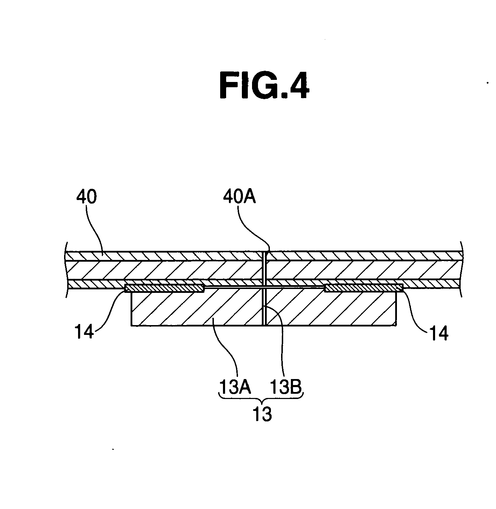

In the foregoing embodiments, the valve mechanism 13 is attached at a substantially circularly cut opening 10A or 20A. However, the size of the opening is not limited by these embodiments. For example, as shown in FIG. 4, it is also possible to attach the valve mechanism 13 to a pinhole-like opening 40A formed by piercing the outer enclosure 40 with a needle.
The valve mechanism used here is one obtained by forming a hole 13B in an elastomeric resin sheet 13A, although other types of valve mechanisms may instead be used.
For example, the hole 13B formed in the valve mechanism need not necessarily be a hole formed by piercing with a needle, and may instead be a slit formed with a cutter.

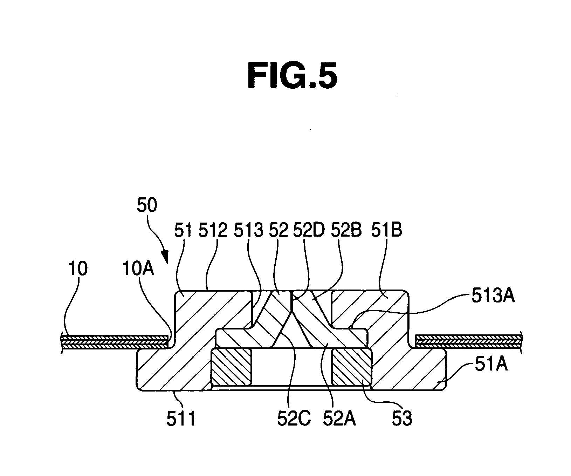

Alternatively, as shown in FIG. 5, it is also possible to use a valve mechanism 50 having a plastic insert 51 which fits into an opening 10A in the outer enclosure 10, and a valve member 52 made of an elastomeric resin disposed within this insert 51.
The insert 51 has a disk-like base 51A welded to the inside of the enclosure 10, and a projecting member 51B formed so as to rise vertically upward from slightly inside of a topside edge of the base 51A.
The insert 51 has formed on the inside thereof a recess 513 of a projecting cross-sectional shape which passes through a backside 511 and a topside 512 of the insert 53 and accommodates therein the valve member 52. The recess 513 has formed therein two holes of circular shape as viewed from above and differing diameter, one in the backside 511 and one in the topside 512 of the insert 51, and moreover has a step 513A which is formed where the two holes communicate at the interior of the insert 51.

The valve member 52 has both a disk-like base 52A which comes into direct contact with the step 513A of the recess 513, and a projection 52B formed so as to rise upward from the base 52A in the formed of a truncated cone. In addition, the valve member 52 has formed therein both a conical notch 52C which extends from the base 52A toward the projection 52B, and a communicating hole 52D which passes from the apex of the notch 52C to the topside of the projection 52B. The communicating hole 52D is likewise normally closed by the resilience of the elastomeric resin and, when the internal pressure of the enclosure 10 rises, similarly opens due to the resilience of the elastomeric resin, thereby releasing gases and the like that have accumulated at the interior of the enclosure 10.

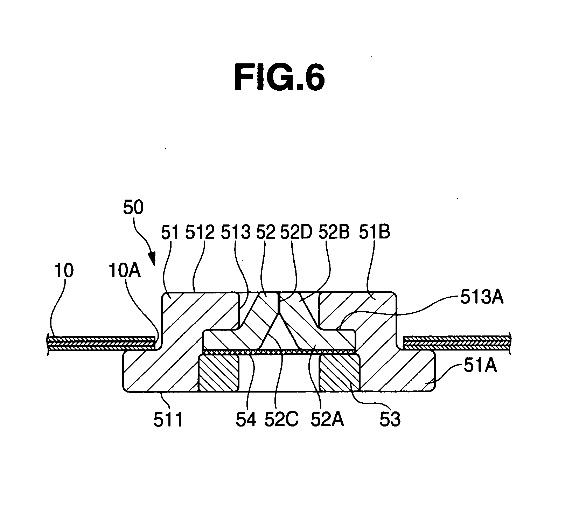

The valve member 52 is received within the insert 51 in such a manner that the topside of the base 52A thereof comes into direct contact with the step 513A in the recess 513. Moreover, to maintain airtightness, a ring-like sealing member 53 is let into the receiving hole 513 so as to cover the peripheral edge on the backside of the base 52A of the valve member 52.
When this valve mechanism 50 is used, as shown in FIG. 6, a porous gas-liquid separating filter 54 may be disposed between the base 52A of the valve member 52 and the sealing member 53.

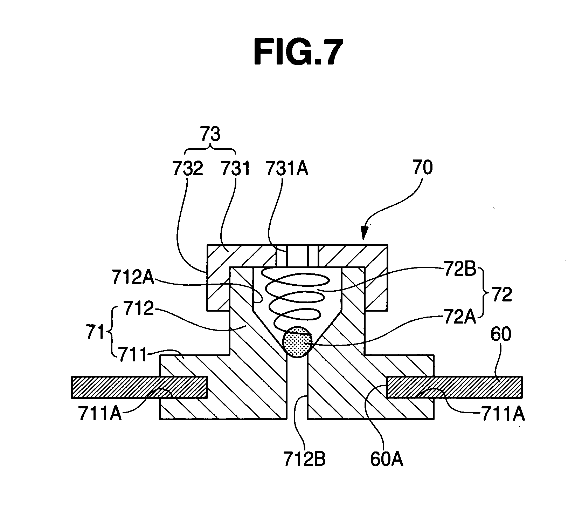

In the foregoing second embodiment, a plastic case 20 was used as the outer enclosure. However, it is also possible to use a metal case. To this end, as shown in FIG. 7, use may be made of a valve mechanism 70 composed of a plastic mating member 71 which fits into an opening 60A formed in the metal case 60, a valve member 72 having a ball 72A composed of an elastomeric resin disposed at the interior of the mating member 71 and a metal spring 72B, and a lid member 73.
The mating member 71 is composed of a disk-like base 711 and a projection 712 of smaller diameter than the base 711 which is formed so as to rise up vertically from the top of the base 711. The base 711 has formed therein a recessed groove 711A which passes around the sidewall thereof. The mating member 711 fits into the metal case 60 by means of this recessed groove 711A. The projection 712 has formed therein, from a top side toward the interior of the projection 712, a cup-shaped recess 712A. In addition, a communicating hole 712B which connects to the back side of the base 711 is formed from the bottommost portion of the recess 712A.

The lid member 73 is composed of a disk-like top panel 731 and a sidewall 732 which extends downward from the periphery of the top panel 731. The lid member 73 fits onto the mating member 71 by means of the sidewall 732. The top panel 731 has formed therein an air hole 731A which communicates between the recess 712A and the exterior.
The valve member 72 is constructed so that the ball 72A made of an elastomeric resin is attached to one end of the metal spring 72B. The ball 72A is placed at the lowest part of the recess 712A so as to close the communicating hole 712B formed in the recess 712A. The other end of the metal spring 72B is attached to the bottom side of the lid member 73 and fixed in place. When the lid member 73 has been set onto the mating member 71, the spring 72B is in a constricted state relative to its uncompressed length. Hence, the ball 72A is pushed to the side of the communicating hole 712B by the elastic force of the spring 72B, thereby closing the hole 712B. When the pressure within the enclosure 60 rises to the point that the stress on the ball 72A becomes larger than the elastic force of the spring 72B, the sphere 72A is pushed back upward in FIG. 7, allowing gases and the like to be released.
The particular materials of which the respective members are made, as well as the shape and structure of the members, are not limited to those mentioned in the foregoing description and may be suitably modified insofar as the objects of the invention are attainable.

### EXAMPLES

Examples of the invention and Comparative Examples are provided by way of illustration, and not be way of limitation.

### Example 1

An electrode-forming composition prepared by mixing coconut shell activated carbon (YP-17, available from Kuraray Chemical Co., Ltd.) as the active material, HS-100 (Denki Kagaku Kogyo KK) as the electrically conductive material and PVDF (weight-average molecular weight, 534,000; Aldrich Chemical Co.) as the binder resin in a weight ratio of 90:5:5 was applied to both sides of aluminum current-collecting foil (20CB; Japan Capacitor Industrial Co., Ltd.) and dried, thereby fabricating polarizable electrodes.
Next, the polarizable electrodes were placed together with a cellulose separator (TF40-50, Nippon Kodoshi Corporation) therebetween. As shown in FIG. 1, each type of electrode was collectively welded to aluminum terminals 11B or 11C, thereby giving a polarizable electrode assembly.
In a separate procedure, a circular opening 10A having a diameter of 4 mm was formed in an outer enclosure 10 composed of an aluminum laminate (Dai Nippon Printing Co., Ltd.; 25 µm outer layer of nylon 6 / 40 µm gas barrier layer of soft aluminum / 30 µm + 15 µm inner layer of polypropylene + modified polypropylene), and a valve mechanism 13 obtained by using a 0.55 mm diameter needle to form a hole 13B in an elastomeric resin sheet 13A (material, EPDM; thickness, 0.3 mm; hardness (Shore A, the same applies below), 60) punched in the form of an 8 mm diameter circle was thermally welded to the outer enclosure 12 via a weld zone 14 (see FIG. 2) so as to cover the opening 10A from the inside of the enclosure 10. Compressed air was then injected and the working pressure of the valve mechanism 13 was measured for the above outer enclosure 10 and valve mechanism 13. The result was 40 kPa (differential pressure).
The above-described polarizable electrode assembly 12 was placed in this outer enclosure 12. Next, an electrolytic solution composed of 20 parts by weight of the ionic liquid diethylmethyl(2-methoxyethyl)ammonium tetrafluoroborate (DEME-BF₄) dissolved in 80 parts by weight of the organic solvent propylene carbonate (PC) was added to the enclosure 10 and impregnated, following which the outer enclosure 10 was thermally sealed, thereby giving an electrical double-layer capacitor cell (hermetically sealed electrical storage device) 1.

### Example 2

Aside from using an electrolytic solution composed of 14 parts by weight of DEME-BF₄, 6 parts by weight of tetraethylammonium tetrafluoroborate (TEA-BF₄) which is a solid electrolyte salt at room temperature, and 80 parts by weight of PC, an electric double layer capacitor cell 1 was obtained in the same way as in Example 1.

### Example 3

Aside from using an electrolytic solution composed of 10 parts by weight of DEME-BF₄, 10 parts by weight of TEA-BF₄ and 80 parts by weight of PC, an electric double layer capacitor cell 1 was obtained in the same way as in Example 1.

### Example 4

Aside from using an electrolytic solution composed of 8 parts by weight of DEME-BF₄, 12 parts by weight of TEA-BF₄ and 80 parts by weight of PC, an electric double layer capacitor cell 1 was obtained in the same way as in Example 1.

### Example 5

Aside from using an electrolytic solution composed of 6.4 parts by weight of DEME-BF₄, 13.6 parts by weight of TEA-BF₄ and 80 parts by weight of PC, an electric double layer capacitor cell 1 was obtained in the same way as in Example 1.

### Example 6

Aside from using an electrolytic solution composed of 14 parts by weight of DEME-BF₄, 6 parts by weight of lithium tetrafluoroborate which is a solid electrolyte salt at room temperature and 80 parts by weight of PC, an electric double layer capacitor cell 1 was obtained in the same way as in Example 1.

### Example 7

Aside from using an electrolytic solution composed of 20 parts by weight of the ionic liquid 1-ethyl-3-methylimidazolium tetrafluoroborate (EMI-BF₄) and 80 parts by weight of PC, and using as the valve mechanism an elastomeric resin sheet (material, EPDM; thickness, 0.3 mm; hardness, 80) having a 1 mm long slit formed therein, an electric double layer capacitor cell 1 was obtained in the same way as in Example 1. The valve mechanism had a working pressure of 30 kPa (differential pressure).

### Example 8

Aside from using an electrolytic solution composed of 14 parts by weight of EMI-BF₄, 6 parts by weight of TEA-BF₆ and 80 parts by weight of PC, forming a circular opening having a diameter of 6 mm in the aluminum laminate outer enclosure, and thermally welding to the enclosure, so as to cover the opening from the inside of the enclosure, a valve mechanism made of an elastomer (material, EPDM; thickness, 0.3 mm; hardness, 50) punched in a circular shape of 10 mm diameter in which a hole was formed with a 0.55 mm diameter needle, an electric double layer capacitor cell 1 was obtained in the same way as in Example 1. The valve mechanism had a working pressure of 25 kPa (differential pressure).

### Example 9

Aside from using as the electrolytic solution DEME-BF₄ alone, forming a circular opening 10A having a diameter of 7 mm in the aluminum laminate outer enclosure 10, and thermally welding to the enclosure 10, so as to cover the opening from the inside of the enclosure, a valve mechanism 13 made of an elastomeric resin sheet 13A (material, EPDM; thickness, 0.3 mm; hardness, 50) punched in a circular shape of 11 mm diameter in which a hole 13B was formed with a 0.55 mm diameter needle, an electric double layer capacitor cell 1 was obtained in the same way as in Example 1. The valve mechanism 13 had a working pressure of 15 kPa (differential pressure).

### Example 10

Aside from using an electrolytic solution composed of 70 parts by weight of DEME-BF₄ and 30 parts by weight of TEA-BF₄, forming a circular opening 10A having a diameter of 11 mm in the aluminum laminate outer enclosure 10, and thermally welding to the enclosure 10, so as to cover the opening 10A from the inside of the enclosure 10, a valve mechanism 13 made of an elastomeric resin sheet 13A (material, EPDM; thickness, 0.5 mm; hardness, 60) punched in a circular shape of 15 mm diameter in which a hole 13B was formed with a 0.55 mm diameter needle, an electric double layer capacitor cell 1 was obtained in the same way as in Example 1. The valve mechanism 13 had a working pressure of 25 kPa (differential pressure).

### Example 11

Aside from thermally welding a valve mechanism made of an elastomeric resin sheet so as to cover the opening in the outer enclosure from the outside, an electric double layer capacitor cell was obtained in the same way as in Example 1. The valve mechanism had a working pressure of 40 kPa (differential pressure).

### Example 12

Aside from, as shown in FIG. 4, forming an opening 40A in the aluminum laminate outer enclosure 40 with a 0.26 mm diameter needle, and thermally welding to the enclosure 10 via a weld zone 14, so as to cover the opening 40A from the inside of the enclosure 40, a valve mechanism 13 made of an elastomeric resin sheet 13A (material, EPDM; thickness, 0.3 mm; hardness, 60) punched in a circular shape of 8 mm diameter in which a hole 13B was formed with a 0.55 mm diameter needle, an electric double layer capacitor cell was obtained in the same way as in Example 1. The valve mechanism had a working pressure of 40 kPa (differential pressure).

### Example 13

Aside from, as shown in FIG. 5, forming a circular opening 10A of 6 mm diameter in the aluminum laminate outer enclosure 10 and thermally welding a valve mechanism 50 to the enclosure 10 so as to cover the opening 10A from the inside of the enclosure 10, an electric double layer capacitor cell was obtained in the same way as in Example 1. The valve mechanism 50 had a working pressure of 10 kPa (differential pressure).

### Example 14

Aside from, as shown in FIG. 6, forming a circular opening 10A of 6 mm diameter in the aluminum laminate outer enclosure 10 and thermally welding to the enclosure 10, so as to cover the opening 10A from the inside of the enclosure 10, a valve mechanism 50 having a porous filter 54 with a gas-liquid separating ability, an electric double layer capacitor cell was obtained in the same way as in Example 1. The valve mechanism 50 had a working pressure of 10 kPa (differential pressure).

### Example 15

### [1] Fabrication of Plastic Case (Outer Enclosure)

Using polypropylene (4700G; available from Calp Corporation) as the molding material, insert molding was carried out at 220°C in such a way as to dispose on the inside the aluminum laminate (Dai Nippon Printing Co., Ltd.) used in Example 1, thereby giving a plastic case (outer enclosure) 20 consisting of, as shown in FIG. 2, a box 21 and a lid 22, each having a total thickness of 3 mm and covered over the entire inside surface with film. A circular opening 20A of 4 mm diameter was formed in the lid 22, and a valve mechanism 13 made of an elastomeric resin sheet 13A (material, EPDM; thickness, 0.3 mm; hardness, 60) punched in a circular shape of 8 mm diameter and having a hole 13B formed therein with a 0.55 mm diameter needle was thermally welded to the plastic case 20 so as to cover the opening 20A from the inside. The valve mechanism 13 had a working pressure of 40 kPa (differential pressure).

### [2] Fabrication of Electrical Storage Element

A polarizable electrode assembly obtained in the same way as in Example 1 was inserted into a polypropylene bag and an electrolytic solution composed of 20 parts by weight of DEME-BF₄ and 80 parts by weight of PC was impregnated therein, following which the polypropylene bag was thermally welded so as not to be completely sealed, thereby giving an electric double layer capacitor cell (electrical storage element) 30.

### [3] Fabrication of Electric Double Layer Capacitor Module

Five of the electrical double layer capacitor cells 30 fabricated in [2] above were connected in series by lead wires 33 and placed in the plastic case 20 fabricated in [1] above in which terminal openings 22C were formed, with the terminals 34 extending through the terminal openings 21C from the inside of the plastic case 20 to the outside, following which the box 21 and lid 22 of the plastic case were united and sealed by thermal welding. Next, gaskets 36 were inserted into the gaps formed between the terminal openings 21C and the terminals 34, and the gaskets 36 were caulked, thereby giving an electric double layer capacitor module (hermetically sealed electric storage device) 2.

### Example 16

Aside from using a 3 mm thick aluminum case 60, welding together the case and the lid (in which the opening with valve had a 10 mm diameter), and welding the valve mechanism 70 shown in FIG. 7 (working pressure, 50 kPa), an electric double layer capacitor module was obtained in the same way as in Example 13.

### Example 17

Aside from forming a circular opening of 11 mm diameter in the aluminum laminate outer enclosure and thermally welding to the outer enclosure, so as to cover this opening from the inside of the enclosure, a valve composed of an elastomeric resin sheet (material, EPDM; thickness, 0.3 mm; hardness, 40) punched in a circular shape of 15 mm diameter and having a hole formed therein with a 0.55 mm diameter needle, an electric double layer capacitor cell was obtained in the same way as in Example 1. The valve mechanism had a working pressure of 4 kPa (differential pressure).

### Example 18

Aside from forming a 10×30 mm rectangular opening in the aluminum laminate enclosure and thermally welding to the enclosure, so as to cover this opening from the outside of the enclosure, a valve composed of a resilient plastic plate (material, EPDM; thickness, 0.8 mm; hardness, 90) cut to a size of 20×40 mm in which a 5 mm long slit was formed, an electric double layer capacitor cell was obtained in the same way as in Example 1. The valve mechanism had a working pressure of 10 kPa (differential pressure).

### Comparative Example 1

Aside from using an electrolytic solution composed of 20 parts by weight of TEA-BF₄ and 80 parts by weight of PC, an electric double layer capacitor cell was obtained in the same way as in Example 1.

### Comparative Example 2

Aside from using an electrolytic solution composed of 6 parts by weight of DEME-BF₄, 14 parts by weight of TEA-BF₄ and 80 parts by weight of PC, an electric double layer capacitor cell was obtained in the same way as in Example 1.

### Comparative Example 3

Aside from using an electrolytic solution composed of 20 parts by weight of TEA-BF₄ and 80 parts by weight of PC, an electric double layer capacitor cell was obtained in the same way as in Example 12.
Table 1 below summarizes the nonaqueous electrolytic solution composition, valve working pressure, surface area of the opening in the enclosure, and other information for each of the above Examples 1 to 18 of the invention and Comparative Examples 1 to 3.

**Table 1**

| | Nonaqueous electrolytic solution composition | | | | Valve mechanism | | |
|---|---|---|---|---|---|---|---|
| | Ionic liquid (pbw) | Solid electrolyte (pbw) | Ionic liquid salt content in electrolyte (wt%) | Organic solvent (pbw) | Shape | Working pressure (differential pressure, kPa) | Surface area of opening |
| Example 1 | 20 | 0 | 100 | 80 | elastomer sheet | 40 | 4 mm dia. |
| Example 2 | 14 | 6 | 70 | 80 | elastomer sheet | 40 | 4 mm dia. |
| Example 3 | 10 | 10 | 50 | 80 | elastomer sheet | 40 | 4 mm dia. |
| Example 4 | 8 | 12 | 40 | 80 | elastomer sheet | 40 | 4 mm dia. |
| Example 5 | 6.4 | 13.6 | 32 | 80 | elastomer sheet | 40 | 4 mm dia. |
| Example 6 | 14 | 6 | 70 | 80 | elastomer sheet | 40 | 4 mm dia. |
| Example 7 | 20 | 0 | 100 | 80 | elastomer sheet | 30 | 4 mm dia. |
| Example 8 | 14 | 6 | 70 | 80 | elastomer sheet | 25 | 6 mm dia. |
| Example 9 | 100 | | 100 | 0 | elastomer sheet | 15 | 7 mm dia. |
| Example 10 | 70 | 30 | 70 | 0 | elastomer sheet | 25 | 11 mm dia. |
| Example 11 | 20 | 0 | 100 | 80 | elastomer sheet | 40 | 4 mm dia. |
| Example 12 | 20 | 0 | 100 | 80 | elastomer sheet | 40 | 0.26 mm dia. |
| Example 13 | 20 | 0 | 100 | 80 | elastomer sheet | 10 | 6 mm dia. |
| Example 14 | 20 | 0 | 100 | 80 | elastomer sheet | 10 | 6 mm dia. |
| Example 15 | 20 | 0 | 100 | 80 | elastomer sheet | 40 | 4 mm dia. |
| Example 16 | 20 | 0 | 100 | 80 | plastic ball + metal spring | 50 | 10 mm dia. |
| Example 17 | 20 | 0 | 100 | 80 | elastomer sheet | 4 | 11 mm dia. |
| Example 18 | 20 | 0 | 100 | 80 | elastomer sheet | 10 | 10x30 mm |
| Comparative Example 1 | 0 | 20 | 0 | 80 | elastomer sheet | 40 | 4 mm dia. |
| Comparative Example 2 | 6 | 14 | 30 | 80 | elastomer sheet | 40 | 4 mm dia. |
| Comparative Example 3 | 0 | 20 | 0 | 80 | elastomer sheet | 10 | 6 mm dia. |

The following tests were carried out on each of the capacitors obtained in above Examples 1 to 18 and Comparative Examples 1 to 3. The results are shown in Table 2.

### Continuous Charging Test

Continuous charging tests were carried out in a thermostatic chamber at a voltage setting during constant-voltage charging of 2.3 V in Examples 7 and 8, 12.5 V in Examples 15 and 16, and 2.5 V in the other examples and comparative examples.
The charge/discharge conditions in the test were as follows. The capacitor was constant-current charged at the one-hour rate current, then constant-voltage charged thereafter for 22 hours at the voltage setting, and subsequently discharged at the one-hour rate current to a cutoff voltage of 0 V, these operations together constituting a single cycle. The retention of discharge capacitance in the 50^{th} cycle was computed based on a discharge capacitance of 100% for the first cycle, in addition to which the appearance of the enclosure and the valve was visually checked. In Examples 1 to 14, 17 and 18 of the invention and Comparative Examples 1 to 3, the continuous charging tests were carried out under an applied pressure of 0.1 MPa in the thickness direction of the capacitor cell.

### High-Temperature, High-Humidity Shelf Test

The capacitors on which the continuous charging test had been carried out in a 70°C atmosphere were each left to stand for 3 days in a test chamber at a temperature of 55°C and a relative humidity of 95%, and the percent increase in water content was computed from the water content in the electrolytic solution prior to the continuous charging test and the water content in the electrolytic solution after standing at high-temperature and high humidity.

**Table 2**

| | Retention of capacitance (%) | Valve working condition and appearance | Water content | |
|---|---|---|---|---|
| | | | Before test | After test |
| Example 1 | 91 | normal | 25 | 33 |
| Example 2 | 90 | normal | 30 | 39 |
| Example 3 | 88 | normal | 32 | 43 |
| Example 4 | 85 | normal | 35 | 50 |
| Example 5 | 84 | normal | 34 | 56 |
| Example 6 | 88 | normal | 30 | 37 |
| Example 7 | 92 | normal | 55 | 77 |
| Example 8 | 90 | normal | 40 | 60 |
| Example 9 | 94 | normal | 35 | 62 |
| Example 10 | 92 | normal | 40 | 89 |
| Example 11 | 90 | normal | 25 | 34 |
| Example 12 | 90 | normal | 25 | 35 |
| Example 13 | 91 | normal | 25 | 30 |
| Example 14 | 90 | normal | 25 | 30 |
| Example 15 | 90 | normal | 25 | 93 |
| Example 16 | 90 | normal | 25 | 46 |
| Example 17 | 43 | normal | 25 | 340 |
| Example 18 | 59 | normal | 25 | 420 |
| Comparative Example 1 | 55 | crystal deposition | 25 | 1,570 |
| Comparative Example 2 | 76 | crystal deposition | 30 | 870 |
| Comparative Example 3 | 69 | crystal deposition | 25 | 650 |

As is apparent from the results in Table 2, those electric double layer capacitors in which the electrolytic solution includes an ionic liquid and in which crystallization of the electrolyte is prevented exhibit normal valve function, high retention of capacitance, high moisture resistance, and excellent durability.

## Claims

1. A hermetically sealed electrical storage device comprising an outer enclosure having gas barrier properties, at least a pair of polarizable electrodes housed in the outer enclosure, a separator interposed between both electrodes, and a nonaqueous electrolytic solution composed of an electrolyte and an optional nonaqueous organic solvent, the electrical storage device being **characterized in that**
the outer enclosure has formed therein an opening for communicating between the interior and exterior of the enclosure and is provided with a valve mechanism which covers the opening and opens and closes in accordance with a difference in pressure between the interior and exterior of the enclosure; and
more than 30 wt% of the electrolyte is an ionic liquid.

2. A hermetically sealed electrical storage device comprising an outer enclosure having gas barrier properties and at least one electrical storage element housed within the outer enclosure, the electrical storage device being
**characterized in that**
the outer enclosure has formed therein an opening for communicating between the interior and exterior of the enclosure and is provided with a valve mechanism which covers the opening and opens and closes in accordance with a difference in pressure between the interior and exterior of the enclosure;
the electrical storage element comprises an inner enclosure, at least a pair of polarizable electrodes housed within the inner enclosure, a separator interposed between both electrodes, and a nonaqueous electrolytic solution composed of an electrolyte, of which more than 30 wt% is an ionic liquid, and an optional nonaqueous organic solvent; and
at least one electrical storage element is not hermetically sealed.

3. The hermetically sealed electrical storage device of claim 1 or 2 which is **characterized in that** the electrolyte contains more than 0 wt% but less than 70 wt% of an electrolyte salt that is solid at room temperature.

4. The hermetically sealed electrical storage device of any one of claims 1 to 3 which is **characterized in that** the opening has a surface area of from 0.01 mm² to 2 cm².

5. The hermetically sealed electrical storage device of any one of claims 1 to 4 which is **characterized in that** the valve mechanism is made of an elastomeric resin sheet having a hole formed therein, which hole closes under the resilience of the elastomeric resin sheet so as to cut off communication between the interior and exterior of the outer enclosure in the absence of a difference in pressure therebetween.

6. The hermetically sealed electrical storage device of claim 5, wherein the elastomeric resin sheet has a thickness of at least 0.1 mm but less than 0.8 mm and a Shore A hardness of 30 to 90.

7. The hermetically sealed electrical storage device of any one of claims 1 to 6, wherein the valve mechanism operates at a pressure difference between the interior and exterior of the outer enclosure of from 5 to 100 kPa.

8. A method for preventing the deposition of electrolyte salt in a valve mechanism of a hermetically sealed electrical storage device, the method being **characterized by** adding an ionic liquid to the nonaqueous electrolytic solution in a hermetically sealed electrical storage device comprising an outer enclosure with gas barrier properties in which a valve mechanism has been provided, at least a pair of polarizable electrodes housed in the outer enclosure, a separator interposed between both electrodes, and a nonaqueous electrolytic solution containing an electrolyte salt which is solid at room temperature.

9. The method for preventing electrolyte salt deposition of claim 8 which is **characterized by** adding at least 43 parts by weight of the ionic liquid per 100 parts by weight of the electrolyte salt which is solid at room temperature.
